# EUROPEAN PATENT SPECIFICATION

(11) **EP 1 423 609 B1**
(45) Date of publication and mention of the grant of the patent: **14.02.2007**
(21) Application number: 02755206.6
(22) Date of filing: 16.08.2002
(51) Int. Cl.: F03G 3/08

(54) **A MECHANICAL DEVICE**
MECHANISCHE VORRICHTUNG
DISPOSITIF MECANIQUE

(30) Priority: 17.08.2001 GB 0120129
(43) Date of publication of application: 02.06.2004
(73) Proprietor: MacPhail, Nicholas Julian Jan Francis, Castel, Guernsey GY5 7XQ (GB)
(72) Inventor: MacPhail, Nicholas Julian Jan Francis, Castel, Guernsey GY5 7XQ (GB)
(74) Representative: Frankland, Nigel Howard
(86) International application number: PCT/GB2002/003822
(87) International publication number: WO 2003/016715

(56) References cited:
- WO-A-01/53721
- WO-A-86/05852
- DE-A- 2 341 245
- US-A- 3 653 269
- US-A- 5 024 112
- US-A- 5 090 260

## Description

THIS INVENTION relates to a mechanical device, and in particular concerns a mechanical device that makes use of the phenomenon of gyroscopic rotation.

The gyroscopic principle is a well-known one and, in brief, it is known that a gyroscope or rotating wheel will precess or change its original angle at a rate proportional to a force applied to change its axial angle and dependent upon its rotating mass diameter and speed 90° to the force applied to change its axial angle.

Hence, a rotating wheel mounted at one end of an axle, the far end of which axle rests on a support, will precess in a horizontal plane, due to a torque which acts in part to counteract the downward force arising from the weight of the wheel and in part to impart a horizontal force to the wheel, as long as the wheel is rotating sufficiently quickly.

US Patent No. 5,024,112 (Kidd) discloses a gyroscopic apparatus, which is intended to have application as a prime mover. The apparatus comprises a pair of discs disposed opposite one another with arms rotatably supporting the discs connected at a pivot point the pivot axis thereof lying a plane midway between the discs. A drive arrangement operates to spin the discs in opposite directions whilst simultaneously rotating the whole assembly of discs and arms about a second axis in the plane as, but perpendicular to, the pivot axis. A camming arrangement working in conjunction with the rotation about the second axis periodically forces the spinning discs to pivot about the pivot axis.

The present invention seeks to provide a mechanical device which exploits this principle.

One aspect of the present invention provides a mechanical device, comprising: a gyroscopic element constrained to rotate around a central axis and spaced apart therefrom, the gyroscopic element having an axis of rotation and being moveable between a first orientation, in which the axis of rotation thereof passes through or close to the central axis, and a second orientation, in which the axis of rotation thereof is substantially perpendicular to the displacement of the gyroscopic element from the central axis.

Advantageously, the mechanical device comprises a pair of gyroscopic elements.

Preferably, the mechanical device comprises a central shaft, the central axis substantially comprising the longitudinal axis of the central shaft.

Conveniently, the gyroscopic element is constrained to rotate around the central axis by an arm.

Advantageously, the arm is moveable between a first position, in which the arm subtends a first angle with the central axis, and a second position, in which the arm subtends a second angle with the central axis, the first angle being greater than the second angle.

Preferably, in the first position, the arm is substantially perpendicular to the central axis.

Conveniently, the mechanical device further comprises an arm restoring device operable to move the arm from the second position to the first position.

Advantageously, the arm is pivotally mounted around the central axis.

Preferably, the mechanical device further comprises a slider which is slidably mounted along the central axis, the slider being connected to a location along the length of the arm by a connector.

Conveniently, the mechanical device further comprises a gyroscope positioning device operable to move the gyroscopic element between the first and second orientations.

Another aspect of the present invention provides a vehicle comprising a mechanical device according to the above.

A further aspect of the present invention provides a method of operating a mechanical device, the method comprising the steps of: providing a gyroscopic element constrained to rotate around a central axis and spaced apart therefrom, the gyroscopic element having an axis of rotation and being moveable between a first orientation, in which the axis of rotation thereof passes through or close to the central axis, and a second orientation, in which the axis of rotation thereof is substantially perpendicular to the displacement of the gyroscopic element from the central axis; positioning the gyroscopic element in the first orientation; positioning the gyroscopic element in a first position such that the rotational axis subtends a first angle with the central axis; rotating the gyroscopic element about the central axis; allowing the gyroscopic element to move to a second position such that the rotational axis thereof subtends a second angle with the central axis, the second angle being smaller than the first angle; moving the gyroscopic element to the second orientation; returning the gyroscopic element to the first position; and moving the gyroscopic element to the first orientation.

Advantageously, the method comprises the step of providing a pair of gyroscopic elements.

Preferably, the step of providing a gyroscopic element constrained to rotate around a central axis comprises the step of mounting the gyroscopic element on an arm that is constrained to rotate about the central axis.

Conveniently, the step of positioning the gyroscopic element in a first position comprises the step of positioning the arm substantially at right angles to the central axis of the shaft.

Advantageously, the method further comprises the step of providing a central shaft, the central axis substantially comprising the longitudinal axis of the central shaft.

Another aspect of the present invention provides a method of operating a mechanical device, comprising repeating the steps set out above.

In order that the present invention may be more readily understood, embodiments thereof will now be described, by way of example, with reference to the accompanying drawings, in which:
Figure 1 shows a device embodying the present invention in a first configuration;
Figure 2 shows the device of Figure 1 in a second configuration;
Figure 3 shows the device of Figure 1 in a third configuration;
Figure 4 shows the device of Figure 1 in a fourth configuration; and
Figure 5 shows further components of the device of Figure 1.

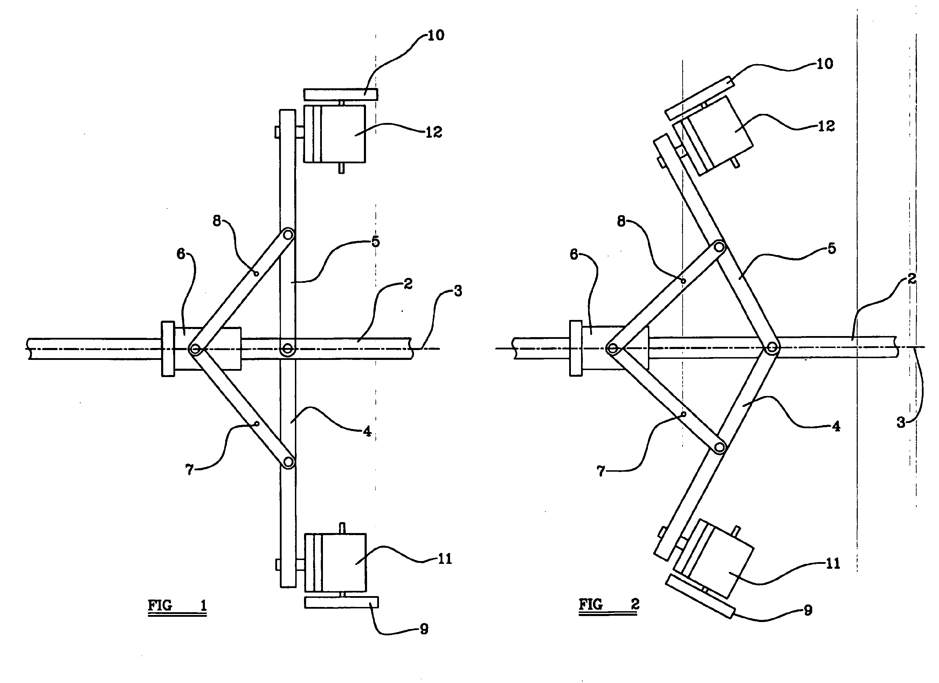

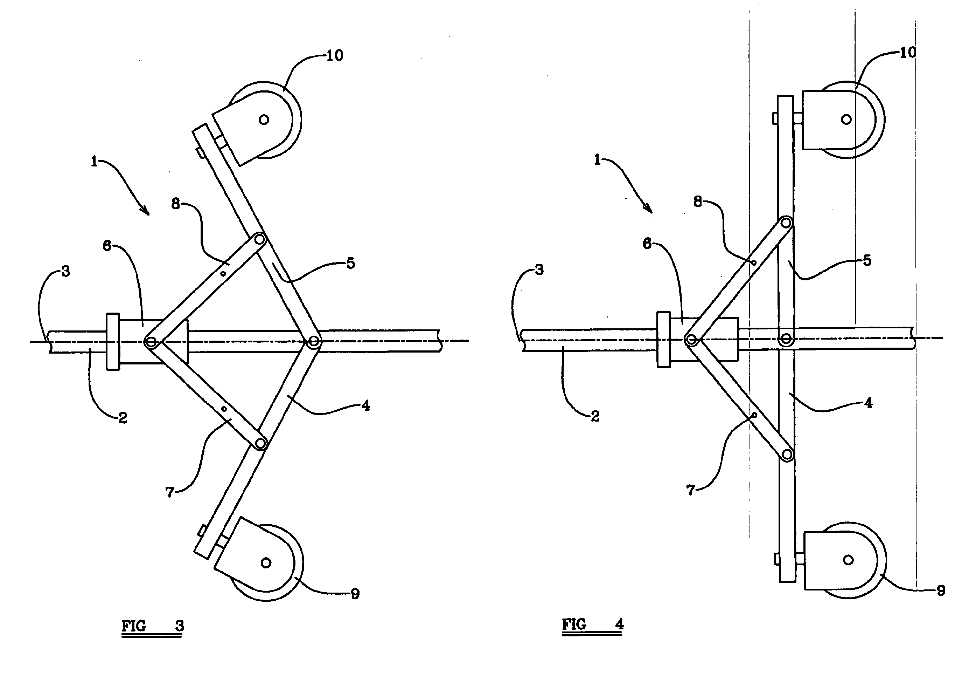

Referring firstly to Figure 1, a mechanical device 1 embodying the present invention comprises a central shaft 2, which is rotatable about the central axis 3 thereof. Pivotally mounted to the central axis 2 are first and second arms 4, 5. The arms 4, 5 are movable between respective first positions, in which the arms 4, 5 are substantially perpendicular to the central axis 3 of the shaft 2, and second positions, in which the arms 4, 5 subtend smaller angles with the central axis 3 of the shaft 2.

A slider 6 is slidably mounted on the central shaft 2, and respective first and second supports 7, 8 connect the slider 6 to locations partway along the lengths of the first and second arms 4, 5.

Preferably, the central shaft 2, first and second arms 4, 5 and first and second supports 7, 8 are formed from a tough, rigid material.

Mounted on the distal ends of the first and second arms 4, 5 are respective first and second gyroscopic elements 9, 10. Each of the gyroscopic elements 9, 10 is rotatable about an axis of rotation.

The first and second gyroscopic elements 9, 10 are mounted to the first and second arms 4, 5 such that they are each movable between a first orientation, in which the axis of rotation passes through or close to the central axis 3 of the shaft 2, and a second orientation, in which the axis of rotation is substantially perpendicular to the displacement of the gyroscopic element 9, 10 from the central axis 3 of the shaft 2.

The first and second gyroscopic elements 9, 10 are each provided with motors 11, 12 to cause the rotation thereof about their respective rotational axes.

In operation of the mechanical device 1, the arms 4, 5 are first placed in the first positions, as described above. The gyroscopic elements 9, 10 are placed in the first orientations, and the mechanical device 1 is now in the first configuration thereof. Rotation of the gyroscopic elements 9, 10 is commenced by activating the motors 11, 12, and the central shaft 2 is rotated about the central axis 3 thereof. While the shaft 2 may rotate continuously in one direction, it is envisaged that the shaft 2 may instead perform rotational oscillations.

It will be understood that the centripetal acceleration experienced by each gyroscopic element 9, 10 due to the rotation of the central shaft 2 (and hence the arms 4, 5) will act to change the axial angle of the gyroscopic elements. Hence, as described above, a resultant force will act on each of the gyroscopic elements 9, 10 in a direction 90° to the force applied to change the axial angle, and it will be understood that this resultant force will be substantially in the plane of the gyroscopic element 9, 10, i.e. substantially parallel to the central axis 3 of the shaft 2. Hence the gyroscopic elements 9, 10 will move in this direction.

Referring to the example, given above, of the rotating wheel, the arrangement of the present invention provides a similar situation, with a torque being applied to a rotating body to produce a force at right angles to the torque, rather than a force being applied to a rotating body to produce a torque at right angles to the force.

This movement of the gyroscopic elements 9, 10 will cause the arms 4, 5 to move to the second positions thereof, moving the slider 6 along the central shaft 2 in the direction of motion of the gyroscopic elements 9, 10. The mechanical device 1 is now in the second configuration thereof. It will also be appreciated that, since no opposing force acts on the mechanical device 1, the mechanical device 1 will receive an impulse in the direction of motion of the gyroscopic elements 9, 10.

Once the arms 4, 5 have moved to their second positions, the gyroscopic elements 9, 10 are moved to their second orientations, as described above. The mechanical device 1 is now in the third configuration thereof. It will be understood that, when the gyroscopic elements 9, 10 are so oriented, there will be little or no force acting on the gyroscopic elements 9, 10 due to gyroscopic effects, since the force acting on the gyroscopic elements 9, 10 due to the centripetal acceleration arising from the rotation of the central shaft 2 will not act to change the axial angles of the gyroscopic elements 9, 10.

With the gyroscopic elements 9, 10 in their second configurations, the arms 4, 5 are returned to their first positions, placing the mechanical device 1 in the fourth configuration thereof. It will be appreciated that no net force acts on the mechanical device 1 during this movement, and so the impulse imparted to the mechanical device while the gyroscopic elements 9, 10 are in their first orientations is not counteracted.

The return of the arms 4, 5 to their first positions may take place due to the rotation of the central shaft 2, i.e. the arms are effectively flung outwards by this rotation, or alternatively means (such as a motor) may be provided to return the arms 4, 5 to their first positions.

The gyroscopic elements 9, 10 are then returned to their first orientations, and it will be understood that the mechanical device 1 is now in the first configuration thereof, as at the start of the cycle. The cycle can be repeated, with the effect of a further impulse in the same direction as the first being imparted to the mechanical device 1, and so on. In this way, the mechanical device 1 can perform a net linear motion in a direction parallel or substantially parallel with the central shaft 2 thereof.

In practical embodiments of the invention, it may be necessary to additional weight to parts of the mechanical device 1, in order to increase the momentum of the moving parts, and hence increase the amount by which the mechanical device 1 will move during each cycle of motion.

In preferred embodiments of the invention, the additional weight is added on or around the slider 6. The slider 6 may itself be of a substantial size and formed from a dense material, or may have additional weight added thereto after manufacture.

During the cycle of motion described above, the slider 6 moves a distance along the shaft 2 in a first direction during the transition from the first to the second configuration. During the return phase of the cycle (i.e. during the movement from the third to the fourth configuration), the slider will move in the opposite direction to the first direction, while the central shaft 2 moves in the first direction as a reaction to the movement of the slider 6 during the return phase. It will be understood that the net effect of these movements is a linear translation of the entire mechanical device 1 in the first direction.

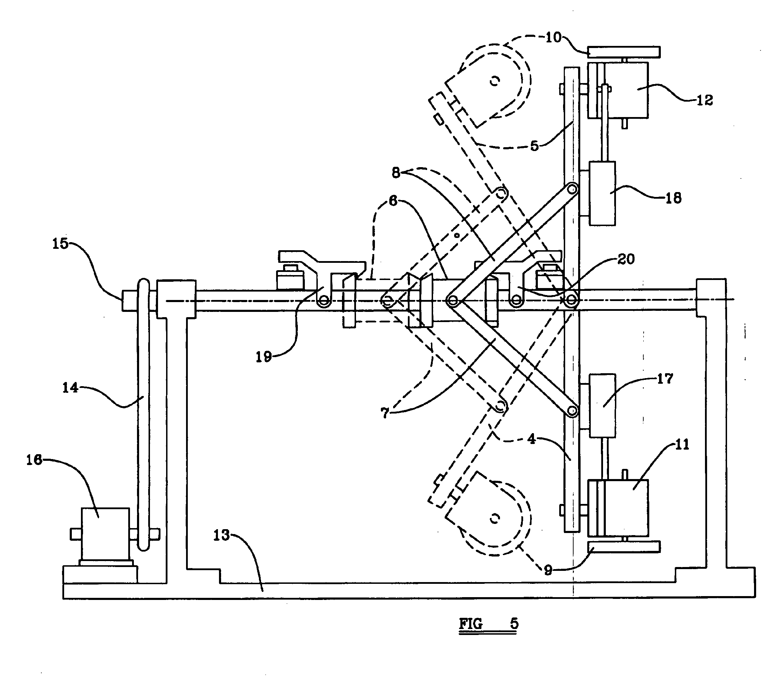

Figure 5 shows further components of a mechanical device 1 embodying the present invention, including a base 13 to which the central shaft 2 is mounted, such that the central shaft 2 may be rotated with respect thereto by means of a drive belt 14 passing over a drive shaft 15, which is driven by a main motor 16. First and second actuators 17, 18 are provided to move the gyroscopic elements 9, 10 between their first and second orientations, and solenoid latches 19, 20 are provided to lock the slider 6 in locations corresponding respectively to the first and second positions of the arms 4, 5.

The first and third configurations of the mechanical device 1 are shown in Figure 5, with the third configuration being shown in phantom.

A skilled person will understand that there are other ways in which the present invention may be put into effect, and the invention is not limited to the arrangement shown in Figure 5.

In embodiments of the invention, more than one pair of gyroscopic elements may be provided, optionally along with associated arms and shafts, and a skilled person will readily appreciate how the above embodiments may be adapted to accommodate such multiple pairs.

In the above description, each gyroscopic element 9, 10 is described as being in the first orientation thereof when the axis of rotation passes through or close to the central axis 3 of the shaft 2. It will be understood that this orientation refers to a situation in which, if the vector representing the axis of rotation is resolved into components parallel with and perpendicular to the central axis 3, the perpendicular component represents an appreciable portion of the vector. Similarly, each gyroscopic element 9, 10 is described as being in the second orientation thereof when the axis of rotation is substantially perpendicular to the displacement of the gyroscopic element 9, 10 from the central axis 3 of the shaft 2, and it will be understood that this orientation refers to a situation in which, if the vector representing the axis of rotation is resolved into components parallel with and perpendicular to the displacement of the gyroscopic element 9, 10 from the central axis 3, the perpendicular component represents an appreciable portion of the vector.

It will be appreciated that the present invention provides a useful device which takes advantage of the gyroscopic effect, and which can be employed to generate a net linear thrust.

In the present specification "comprises" means "includes or consists of" and "comprising" means "including or consisting of".

## Claims

1. A mechanical device, comprising:
a gyroscopic element (9,10) constrained to rotate around a central axis and spaced apart therefrom, the gyroscopic element (9, 10) having an axis of rotation and the device being **characterised by** the gyroscopic element (9,10) being moveable between a first orientation, in which the axis of rotation thereof passes through or close to the central axis, and a second orientation, in which the axis of rotation thereof is substantially perpendicular to the displacement of the gyroscopic element from the central axis, wherein
when the gyroscopic element (9, 10) is in the first orientation and the gyroscopic element (9, 10) rotates around the central axis, a resultant force on the gyroscopic element (9, 10) causes the gyroscopic (9, 10) element to move in a direction substantially parallel to the central axis.

2. A mechanical device according to Claim 1, comprising a pair of gyroscopic elements (9, 10).

3. A mechanical device according to Claim 1 or 2, wherein the gyroscopic element (9, 10) is constrained to rotate around the central axis by an arm (4, 5).

4. A mechanical device according to any preceding claim, further comprising a gyroscope positioning device (17, 18) operable to move the gyroscopic element (9, 10) between the first and second orientations.

5. A vehicle comprising a mechanical device according to any preceding claim.

6. A method of operating a mechanical device, the method comprising the step of providing a gyroscopic element (9, 10) constrained to rotate around a central axis and spaced apart therefrom, the gyroscopic element (9, 10) having an axis of rotation, and being **characterised by** being moveable between a first orientation, in which the axis of rotation thereof passes through or close to the central axis, and a second orientation, in which the axis of rotation thereof is substantially perpendicular to the displacement of the gyroscopic element (9, 10) from the central axis,
the arrangement being such that, when the gyroscopic element (9, 10) is in the first orientation and the gyroscopic element (9, 10) rotates around the central axis, a resultant force on the gyroscopic element (9, 10) causes the gyroscopic element (9, 10) to move in a direction substantially parallel to the central axis.

7. A method according to Claim 6, further comprising the steps of:
positioning the gyroscopic element (9, 10) in the first orientation;
positioning the gyroscopic element (9, 10) in a first position such that the rotational axis subtends a first angle with the central axis;
rotating the gyroscopic element (9, 10) about the central axis;
allowing the gyroscopic element (9, 10) to move to a second position such that the rotational axis thereof subtends a second angle with the central axis, the second angle being smaller than the first angle;
moving the gyroscopic element (9, 10) to the second orientation;
returning the gyroscopic element (9, 10) to the first position; and
moving the gyroscopic element (9, 10) to the first orientation.

8. A method according to Claim 6 or 7, comprising the step of providing a pair of gyroscopic elements (9, 10).

9. A method according to any one of Claims 6 to 8, wherein the step of providing a gyroscopic element (9, 10) constrained to rotate around a central axis comprises the step of mounting the gyroscopic element (9, 10) on an arm (4, 5)that is constrained to rotate about the central axis.

10. A method of operating a mechanical device, comprising repeating the steps of any one of Claims 6 to 9.

## Patentansprüche

1. Mechanische Vorrichtung, die Folgendes umfasst:
ein gyroskopisches Element (9, 10), das zur Drehung um eine mittlere Achse und in einem Abstand davon gezwungen wird, wobei das gyroskopische Element (9, 10) eine Drehachse aufweist und die Vorrichtung **dadurch gekennzeichnet ist, dass** das gyroskopische Element (9, 10) zwischen einer ersten Ausrichtung, in der seine Drehachse durch die oder nahe der mittlere(n) Achse verläuft, und einer zweiten Ausrichtung, in der seine Drehachse im Wesentlichen senkrecht zur Verschiebung des gyroskopischen Elements von der mittleren Achse verläuft, beweglich ist, wobei
eine resultierende Kraft auf das gyroskopische Element (9, 10) eine Bewegung des gyroskopischen Elements (9, 10) in einer im Wesentlichen parallel zur mittleren Achse verlaufenden Richtung bewirkt, wenn sich das gyroskopische Element (9, 10) in der ersten Ausrichtung befindet und sich um die mittlere Achse dreht.

2. Mechanische Vorrichtung nach Anspruch 1, die ein Paar gyroskopischer Elemente (9, 10) umfasst.

3. Mechanische Vorrichtung nach Anspruch 1 oder 2, bei der das gyroskopische Element (9, 10) durch einen Arm (4, 5) zur Drehung um die mittlere Achse gezwungen wird.

4. Mechanische Vorrichtung nach einem der vorhergehenden Ansprüche, die weiterhin eine Vorrichtung (17, 18) zum Positionieren des Gyroskops umfasst, die zum Bewegen des gyroskopischen Elements (9, 10) zwischen der ersten und der zweiten Ausrichtung bedient werden kann.

5. Fahrzeug mit einer mechanischen Vorrichtung nach einem der vorhergehenden Ansprüche.

6. Verfahren zum Betrieb einer mechanischen Vorrichtung, das den Schritt des Bereitstellens eines zur Drehung um eine mittlere Achse und in einem Abstand davon gezwungenen gyroskopischen Elements (9, 10) umfasst, wobei das gyroskopische Element (9, 10) eine Drehachse aufweist und **dadurch gekennzeichnet ist, dass** es zwischen einer ersten Ausrichtung, in der seine Drehachse durch die oder nahe der mittlere(n) Achse verläuft, und einer zweiten Ausrichtung, in der seine Drehachse im Wesentlichen senkrecht zur Verschiebung des gyroskopischen Elements (9, 10) von der mittleren Achse verläuft, beweglich ist, wobei
die Anordnung derart ist, dass eine resultierende Kraft auf das gyroskopische Element (9, 10) eine Bewegung des gyroskopischen Elements (9, 10) in einer im Wesentlichen parallel zur mittleren Achse verlaufenden Richtung bewirkt, wenn sich das gyroskopische Element (9, 10) in der ersten Ausrichtung befindet und sich um die mittlere Achse dreht.

7. Verfahren nach Anspruch 6, das weiterhin die folgenden Schritte umfasst:
Positionieren des gyroskopischen Elements (9, 10) in der ersten Ausrichtung;
Positionieren des gyroskopischen Elements (9, 10) in einer ersten Position, so dass die Drehachse mit der mittleren Achse einen ersten Winkel einschließt;
Drehen des gyroskopischen Elements (9, 10) um die mittlere Achse;
Gestatten, dass sich das gyroskopische Element (9, 10) in eine zweite Position bewegt, so dass seine Drehachse mit der mittleren Achse einen zweiten Winkel einschließt, wobei der zweite Winkel kleiner als der ersten Winkel ist;
Bewegen des gyroskopischen Elements (9, 10) in die zweite Ausrichtung;
Rückführen des gyroskopischen Elements (9, 10) in die ersten Position und
Bewegen des gyroskopischen Elements (9, 10) in die erste Ausrichtung.

8. Verfahren nach Anspruch 6 oder 7, das den Schritt des Bereitstellens eines Paars gyroskopischer Elemente (9, 10) umfasst.

9. Verfahren nach einem der Ansprüche 6 bis 8, bei dem der Schritt des Bereitstellens eines gyroskopischen Elements (9, 10), das zur Drehung um eine mittlere Achse gezwungen wird, den Schritt des Befestigens des gyroskopischen Elements (9, 10) an einem Arm (4, 5) umfasst, der zur Drehung um die mittlere Achse gezwungen wird.

10. Verfahren zum Betrieb einer mechanischen Vorrichtung, die das Wiederholen der Schritte nach einem der Ansprüche 6 bis 9 umfasst.

## Revendications

1. Dispositif mécanique, comprenant:
un élément gyroscopique (9, 10) contraint de tourner autour d'un axe central et espacé de celui-ci, l'élément gyroscopique (9, 10) présentant un axe de rotation, et le dispositif étant **caractérisé en ce que** l'élément gyroscopique (9, 10) peut être déplacé entre une première orientation, dans laquelle l'axe de rotation de celui-ci passe à travers ou près de l'axe central, et une deuxième orientation, dans laquelle l'axe de rotation de celui-ci est essentiellement perpendiculaire au déplacement de l'élément gyroscopique s'écartant de l'axe central, dans lequel:
lorsque l'élément gyroscopique (9, 10) se trouve dans la première orientation et que l'élément gyroscopique (9, 10) tourne autour de l'axe central, une force résultante sur l'élément gyroscopique (9, 10) entraîne l'élément gyroscopique (9, 10) à se déplacer dans une direction essentiellement parallèle à l'axe central.

2. Dispositif mécanique selon la revendication 1, comprenant une paire d'éléments gyroscopiques (9, 10).

3. Dispositif mécanique selon la revendication 1 ou 2, dans lequel l'élément gyroscopique (9, 10) est contraint de tourner autour de l'axe central par un bras (4, 5).

4. Dispositif mécanique selon l'une quelconque des revendications précédentes, comprenant en outre un dispositif de positionnement de gyroscope (17, 18) pouvant être actionné pour déplacer l'élément gyroscopique (9, 10) entre les première et deuxième orientations.

5. Véhicule équipé d'un dispositif mécanique selon l'une quelconque des revendications précédentes.

6. Procédé pour actionner un dispositif mécanique, le procédé comprenant l'étape de fourniture d'un élément gyroscopique (9, 10) contraint de tourner autour d'un axe central et espacé de celui-ci, l'élément gyroscopique (9, 10) présentant un axe de rotation et étant **caractérisé en ce qu'**il peut être déplacé entre une première orientation, dans laquelle l'axe de rotation de celui-ci passe à travers ou près de l'axe central, et une deuxième orientation, dans laquelle l'axe de rotation de celui-ci est essentiellement perpendiculaire au déplacement de l'élément gyroscopique (9, 10) s'écartant de l'axe central,
l'agencement étant conçu de telle sorte que, lorsque l'élément gyroscopique (9, 10) se trouve dans la première orientation et que l'élément gyroscopique (9, 10) tourne autour de l'axe central, une force résultante sur l'élément gyroscopique (9, 10) entraîne l'élément gyroscopique (9, 10) à se déplacer dans une direction essentiellement parallèle à l'axe central.

7. Procédé selon la revendication 6, comprenant en outre les étapes suivantes:
positionner l'élément gyroscopique (9, 10) dans la première orientation;
positionner l'élément gyroscopique (9, 10) dans une première position de telle sorte que l'axe de rotation sous-tende un premier angle avec l'axe central;
faire tourner l'élément gyroscopique (9, 10) autour de l'axe central;
permettre à l'élément gyroscopique (9, 10) de se déplacer vers une deuxième position de telle sorte que l'axe de rotation de celui-ci sous-tende un deuxième angle avec l'axe central, le deuxième angle étant inférieur au premier angle;
déplacer l'élément gyroscopique (9, 10) vers la deuxième orientation;
renvoyer l'élément gyroscopique (9, 10) dans la première position; et
déplacer l'élément gyroscopique (9, 10) vers la première orientation.

8. Procédé selon la revendication 6 ou 7, comprenant l'étape de fourniture d'une paire d'éléments gyroscopiques (9, 10).

9. Procédé selon l'une quelconque des revendications 6 à 8, dans lequel l'étape de fourniture d'un élément gyroscopique (9, 10) contraint de tourner autour d'un axe central comprend l'étape de montage de l'élément gyroscopique (9, 10) sur un bras (4, 5) qui est contraint de tourner autour de l'axe central.

10. Procédé pour actionner un dispositif mécanique, comprenant la répétition des étapes selon l'une quelconque des revendications 6 à 9.
